# EUROPÄISCHE PATENTSCHRIFT

(11) **EP 2 979 901 B1**
(45) Veröffentlichungstag und Bekanntmachung des Hinweises auf die Patenterteilung: **01.05.2019**
(21) Anmeldenummer: 15169292.8
(22) Anmeldetag: 27.05.2015
(51) Int. Cl.: B60C 11/01

(54) **FAHRZEUGLUFTREIFEN**
PNEUMATIC TYRES FOR A VEHICLE
PNEUMATIQUES DE VEHICULE

(30) Priorität: 01.08.2014 DE 102014215246
(43) Veröffentlichungstag der Anmeldung: 03.02.2016
(73) Patentinhaber: Continental Reifen Deutschland GmbH, 30165 Hannover (DE)
(72) Erfinder: Brandau, Christian, 30419 Hannover (DE); Schlittenhard, Jan, 30900 Wedemark (DE)
(74) Vertreter: Finger, Karsten

(56) Entgegenhaltungen:
- EP-A2- 1 987 965
- DE-A1-102008 044 213
- JP-A- 2000 280 711
- US-A1- 2003 041 939

## Beschreibung

Die Erfindung betrifft einen Fahrzeugluftreifen mit einem profilierten Laufstreifen mit durch Schulterkanten abgesetzten Schulterabschnitten mit Schulterflanken, die mit erhöhten und vertieften Bereichen versehen sind, wobei an zumindest einer Schulterflanke die erhöhten Bereiche eine Bezugskontur überragen und die vertieften Bereiche unterhalb der Bezugskontur ausgebildet sind, wobei die Bezugskontur in Verlängerung der Außenkontur des Auslaufes des Schulterabschnittes bis zur Schulterkante verläuft und im Querschnitt eine gerade oder leicht nach außen gebogen verlaufende Linie ist, wobei die vertieften Bereiche unmittelbar an die Schulterkante anschließen und die erhöhten Bereiche in Richtung Seitenwand an die vertieften Bereiche anschließen.

Fahrzeugluftreifen mit Schulterkanten, die den auf trockenem Untergrund bodenberührenden Teil des Laufstreifens von den Schulterabschnitten trennen, sind insbesondere nordische Winterreifen, aber auch Nutzfahrzeugreifen, Van-Reifen, Leicht-LKW-Reifen und Reifen für Offroad-Einsatz. Die außerhalb der Schulterkanten in Richtung Seitenwände verlaufenden Schulterflanken bilden die auf weichen Untergründen, wie Schnee oder Schneematsch, in Kontakt mit dem Untergrund tretenden Off-Shoulder-Bereiche. Die Schulterflanken werden einerseits als Designflächen genutzt und andererseits mit Vertiefungen oder Schraffuren'versehen, um den Griff auf weichem Untergrund zu verbessern.

Ein Fahrzeugluftreifen der eingangs genannten Art ist aus der JP 2000 280 711 A bekannt. Die an den Schulterflanken ausgebildeten Vertiefungen weisen im Querschnitt einen insgesamt bogenartig nach innen gekrümmten Verlauf auf, die Erhebungen sind im Querschnitt gegenüber der Bezugskontur etwa dreieckförmig mit einer ausgeprägten in Umfangsrichtung orientierten Kante an der Spitze des "Dreieckes" ausgestaltet.

Aus der US 2003/041939 ist ein Fahrzeugluftreifen bekannt ,welcher an den Schulterflanken Erhebungen mit einem im Wesentlichen dreieckigen Querschnitt aufweisen. An den Schulterflanken sind ferner schmale in Umfangsrichtung verlaufende rillenartige Vertiefungen ausgebildet.

Die EP 1 987 965 A2 offenbart einen üblichen PKW-Reifen, dessen Schulterabschnitte nicht durch Schulterkanten vom bodenberührenden Bereich des Laufstreifens abgesetzt sind. Schulterseitig sind in Umfangsrichtung aneinandergereihte, klein dimensionierte Erhebungen vorgesehen, welche dazu beitragen sollen, die Traktion des Laufstreifens zu verbessern.

Die DE 10 2008 044213 A1 betrifft einen Fahrzeugluftreifen, dessen Schulterflanken zwar mit Flankenblöcken versehen sind, unmittelbar an die Schulterkanten schließen jedoch keine Vertiefungen an.

Aus der DE 40 00 339 A1 ist ein Fahrzeugluftreifen bekannt, bei dem entlang jeder Schulterkante in Reihen angeordnete Schulterblöcke verlaufen. Jeder Schulterblock ist an seiner Oberseite mit einer Vertiefung versehen, deren axial inneres Ende begrenzt ist, während ihr axial äußeres Ende an der axial äußeren Seite des Schulterblocks endet. Die Seitenwandabschnitte an der axial äußeren Seite jedes Schulterblocks sind mit einem Fortsatz versehen, der über die Seitenwandfläche nach außen vorsteht und eine obere Fläche besitzt, die direkt in den Boden der Vertiefung übergeht. Vorsprünge an den Schulterbereichen des Reifens sollen beim Fahren auf verschneiter Straße in Berührung mit dem Tiefschnee oder der Reifenspur kommen, wenn die Straße mit gespurtem Schnee bedeckt ist, um das Traktionsverhalten zu verbessern.

Der Erfindung liegt die Aufgabe zugrunde, einen Reifen der eingangs genannten Art mit unter Offroad-Bedingungen oder in tieferem Schnee oder Schneematsch besonders effektiven Griffkanten an den Schulterabschnitten versehen zu können, ohne das Gummivolumen in diesem Bereich erhöhen zu müssen.

Gelöst wird die gestellte Aufgabe erfindungsgemäß dadurch, dass die vertieften Bereiche Vertiefungen sind, deren Böden im Wesentlichen parallel zur Bezugskontur verlaufen, wobei die erhöhten Bereiche Flankenblöcke sind, deren Außenflächen im Wesentlichen parallel zur Bezugskontur verlaufen.

Die Kombination von vertieften und erhöhten Elementen gestattet es, Griffkanten besonders ausgeprägt auszubilden. Darüber hinaus gestattet es die Erfindung, das Gummivolumen in den Schulterbereichen gering zu halten und bei Bedarf gezielt zu verändern.

Die erhöhten und die vertieften Bereiche sollen einerseits optimal wirkende Griffkanten für ein Fahren unter Offroad-Bedingungen oder in tieferem Schnee oder Schneematsch zur Verfügung stellen und andererseits auch optisch ansprechend gestaltet werden können. In diesem Zusammenhang ist es besonders vorteilhaft, wenn die vertieften Bereiche Vertiefungen sind, deren Böden im Wesentlichen parallel zur und unterhalb bzw. innerhalb der Bezugskontur verlaufen und zur Bezugskontur einen Normalabstand von bis zu 3 mm aufweisen. Was die erhöhten Bereiche betrifft, ist es besonders vorteilhaft, wenn diese Flankenblöcke sind, deren Außenflächen im Wesentlichen parallel zur Bezugskontur verlaufen und deren Außenflächen zur Bezugskontur einen Normalabstand von bis zu 3 mm aufweisen.

Es ist vorteilhaft, wenn zumindest die bei am Fahrzeug montiertem Reifen außen befindliche Schulterflanke erfindungsgemäß gestaltet wird, da diese für die Handlingeigenschaften auf Schnee vorrangig maßgeblich ist. Dabei wird erfindungsgemäß darauf geachtet, dass die Gummivolumina in den beiden Schulterabschnitten zumindest im Wesentlichen gleich groß sind. Es ist jedoch auch möglich, beide Schulterflanken gemäß der Erfindung und zumindest bezüglich der Gummivolumina übereinstimmend auszugestalten.

Weitere Merkmale, Vorteile und Einzelheiten der Erfindung werden nun anhand der Zeichnung, die schematisch eine Ausführungsform der Erfindung darstellt, näher beschrieben. Dabei zeigen
Fig. 1 eine Querschnittsansicht eines Teiles eines Fahrzeugluftreifens, wobei lediglich die Laufstreifenkonturen und eine Seitenwandkontur dargestellt sind,
Fig. 2 eine Ansicht eines Abschnittes eines Schulterbereiches des Laufstreifens eines Fahrzeugluftreifens mit einer Ausführungsform der Erfindung und
Fig. 3 einen Schnitt entlang der Linie III-III der Fig. 2.

Erfindungsgemäß ausgeführte Fahrzeugluftreifen sind insbesondere für den Einsatz auf Personenkraftwagen, auf Offroad-Fahrzeugen oder SUVs (Sport Utility Vehicles) vorgesehen, können jedoch auch Nutzfahrzeugreifen sein. Fahrzeugluftreifen gemäß der Erfindung sind vorzugsweise nordische PKW-Winterreifen (Reifen zum Einsatz in schneereichen Regionen), insbesondere Spike- und Softcompound-Reifen, die im Gegensatz zu PKW-Sommerreifen und den in Mitteleuropa gängigen PKW-Winterreifen im Querschnitt betrachtet eckige Schulterkonturen, wie noch beschrieben wird, aufweisen.

Die Erfindung wird daher nachfolgend anhand der Ausführung eines Schulterbereiches eines nordischen PKW-Winterreifens beschrieben.

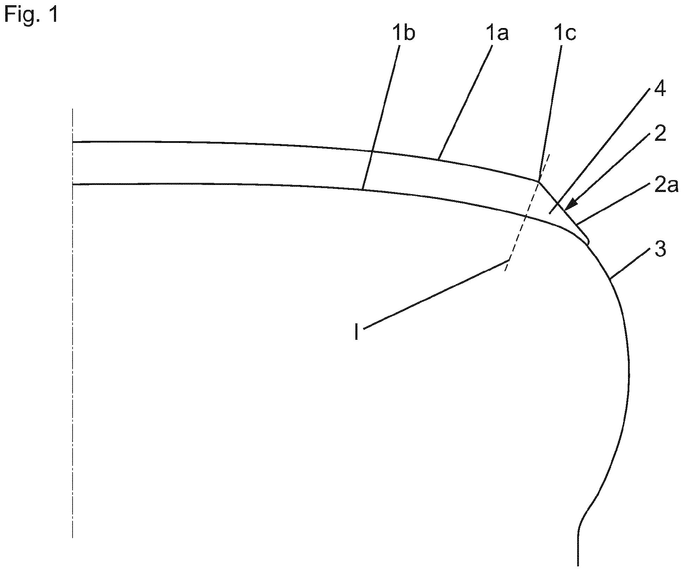

Fig. 1 zeigt schematisch den Verlauf der Außenkontur 1a und den Verlauf der Unterzugskontur 1b (das ist üblicherweise die Einhüllende entlang der tiefsten Stellen der Umfangsnuten) eines Laufstreifens 1 eines PKW-Winterreifens. Zu erkennen ist ferner die eine Schulterkante 1c, die den einen seitlichen Rand des Laufstreifens 1 in der Bodenaufstandsfläche bei am Fahrzeug montiertem Reifen kennzeichnet. An die Schulterkante 1c schließt Richtung Seitenwand 3 der Schulterabschnitt 4 des Laufstreifens 1 mit einer Schulterflanke 2 an, deren Außenkontur 2a in Fig. 1 eingezeichnet ist. Eine in radiale Richtung verlaufende und durch eine gestrichelte Linie 1 gekennzeichnete Schnittebene durch die Schulterkante 1c begrenzt den Schulterabschnitt 4.

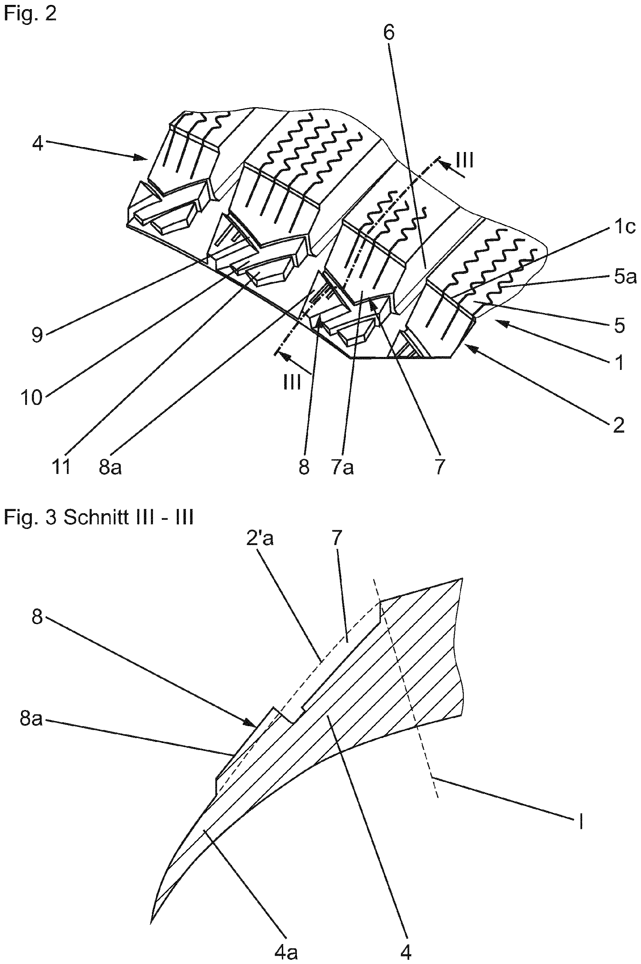

Fig. 2 zeigt den an die Schulterkante 1c anschließenden Abschnitt des Laufstreifens 1 und den Schulterabschnitt 4. Der dargestellte Laufstreifen 1 weist Schulterblöcke 5 auf, die voneinander durch Querrillen 6 getrennt sind. Die gezeigten Schulterblöcke 5 sind beispielhaft jeweils mit drei oder vier in Draufsicht zickzackförmig verlaufenden Einschnitten 5a versehen, die sich im Wesentlichen parallel zu den Querrillen 6 erstrecken, eine Breite von 0,4 mm bis 0,6 mm aufweisen und ansonsten in bekannter Weise ausgeführt sein können. Die Querrillen 6 laufen im Schulterabschnitt 4 zwischen den Schulterblöcken 5 aus, sodass die Schulterflanke von den schulterseitigen Flanken der Schulterblöcke 5 gebildet wird.

Fig. 3 zeigt einen Querschnitt entlang der Linie III-III der Fig. 2 durch den Schulterabschnitt 4, wobei in dieser Figur strichliert eine Bezugskontur 2'a eingezeichnet ist. Die Bezugskontur 2'a verläuft in Fortsetzung der Außenkontur des seitenwandseitigen Auslaufes 4a des Schulterabschnittes 4 zur Schulterkante 1c als Gerade oder als leicht gebogene Linie. Wie Fig. 2 in Verbindung mit Fig. 3 zeigt, weisen die schulterseitigen Flanken jeweils an die Schulterkante 1c anschließend einen gegenüber der Bezugskontur 2'a vertieften Bereich 7 auf, welcher bei der gezeigten Ausführung jeweils über die gesamte Breite der schulterseitigen Flanken der Schulterblöcke 5 verläuft. Der Boden 7a des vertieften Bereiches 7 verläuft zumindest im Wesentlichen parallel zur Bezugskontur 2'a und weist an seiner tiefsten Stelle einen Abstand (Normalabstand, bezogen auf die Bezugskontur 2'a) von bis zu 3mm zur Bezugskontur 2'a auf. Auf den vertieften Bereich 7 folgt Richtung Seitenwand 3 zumindest ein die Bezugskontur 2'a überragender erhöhter Bereich 8, insbesondere in der Form eines an der schulterseitigen Flanke ausgebildeten Flankenblockes, welcher eine zumindest im Wesentlichen parallel zur Bezugskontur 2'a verlaufende Außenfläche 8a aufweist. Die Außenfläche 8a weist an ihrer höchsten Stelle einen Abstand (Normalabstand, bezogen auf die Bezugskontur 2'a) von bis zu 3mm zur Bezugskontur 2'a auf.

Bei der in Fig. 2 und Fig. 3 gezeigten Ausführungsform ist der vertiefte Bereich 7 durch eine V-förmig verlaufende, seichte und schmale Rille 9 vom erhöhten Bereich 8 abgesetzt. Dabei ist bei der gezeigten Ausführungsform der erhöhte Bereich 8 ein im Wesentlichen dreieckiger Flankenblock, dessen eine Blockflanke entlang des einen Abschnittes der V-förmig verlaufenden Rille 9 verläuft. Entlang des zweiten Abschnittes der V-förmigen Rille 9 verläuft eine blockartige Erhebung 10, an welche eine weitere blockartige Erhebung 11 anschließt. Die Außenflächen der blockartigen Erhebungen 10, 11 befinden sich entweder auf dem Niveau der Bezugskontur 2'a oder darunter. Der vertiefte Bereich 7, der erhöhte Bereich 8 und die beiden blockartigen Erhebungen 10, 11 bedecken im Wesentlichen jene Bereiche der schulterseitigen Flanken, die sich zwischen den Ausläufen der Querrillen 6 befinden.

Der erfindungsgemäß ausgestaltete Schulterabschnitt 4 bildet den sogenannten Off-Shoulder-Bereich, welcher nur auf weichen Untergründen, wie Schnee, Schneematsch oder beim Fahren unter Offroad-Bedingungen mit dem Untergrund in Kontakt kommt. Die erfindungsgemäß erhöhten und vertieften Bereiche 7, 8 gestatten es, sehr gut wirkende Griffkanten für das Fahren auf solchen Untergründen zur Verfügung zu stellen. Gemäß der Erfindung ausgeführte Schulterabschnitte werden daher vorzugsweise an der für die Handlingeigenschaften maßgeblichen Außenseite des jeweiligen Fahrzeugluftreifens ausgebildet. Unter "Außenseite" ist jene Seite des Fahrzeugluftreifens zu verstehen, welche bei am Fahrzeug montiertem Reifen an der Außenseite des Fahrzeuges zu sehen ist. An der Innenschulter kann eine andere Ausgestaltung des Schulterabschnittes gewählt werden. In jedem Fall ist es jedoch wesentlich, dass die Gummivolumina in den beiden Schulterabschnitten zumindest im Wesentlichen gleich groß sind. Gerade die erfindungsgemäße Ausgestaltung mit erhöhten und vertieften Bereichen ermöglicht es, trotz einem Ausbilden von ausgeprägten Griffkanten die Gummivolumina in beiden Schulterabschnitten des Reifens gleich groß auszuführen, auch wenn die Schulterabschnitte ungleich ausgeführt werden, da die Vertiefungen und Erhebungen auf effektive Weise eine entsprechende Anpassung der Gummivolumina gestatten. Ist dies nicht der Fall, so wird bei der Vulkanisation des Reifens in einer Vulkanisationsform in den Schulterabschnitten unterschiedlich viel Gummimaterial verdrängt. Dies führt dazu, dass die radial innerhalb der Schulterabschnitte befindlichen Festigkeitsträger in den Gürtellagen unterschiedlich weit nach innen gedrückt werden. Derart asymmetrisch und ungleichmäßig verlaufende Gürtellagen bewirken ein "Schiefziehen" des Fahrzeugluftreifens, der Geradeauslauf wird beeinträchtigt. Darüber hinaus werden durch derart ungleichmäßig verlaufende Gürtellagen die Dauerhaltbarkeit, das Abrollgeräusch und das Abriebsverhalten des Fahrzeugluftreifens negativ beeinflusst.

Die Erfindung ist auf das dargestellte Ausführungsbeispiel nicht eingeschränkt. Insbesondere können pro schulterseitiger Flanke jedes Schulterblockes mehr als ein vertiefter Bereich, insbesondere Vertiefungen, und mehr als ein erhöhter Bereich, insbesondere Flankenblöcke, vorgesehen werden. Darüber hinaus können in den Flankenblöcken Einschnitte vorgesehen werden, die die Griffeigenschaften weiter verbessern.

### Bezugsziffernliste

- 1: Laufstreifen
- 1a: Außenkontur
- 1b: Unterzugskontur
- 1c: Schulterkante
- 2: Schulterflanke
- 2a: Außenkontur
- 2'a: Bezugskontur
- 3: Seitenwand
- 4: Schulterabschnitt
- 4a: Auslauf
- 5: Schulterblock
- 5a: Einschnitt
- 6: Querrille
- 7: vertiefter Bereich
- 7a: Boden
- 8: erhöhter Bereich
- 8a: Außenfläche
- 9: Rille
- 10: Erhebung
- 11: Erhebung
- 1: Linie

## Patentansprüche

1. Fahrzeugluftreifen mit einem profilierten Laufstreifen (1) mit durch Schulterkanten (1c) abgesetzten Schulterabschnitten (4) mit Schulterflanken (2), die mit erhöhten und vertieften Bereichen (7, 8) versehen sind, wobei an zumindest einer Schulterflanke (2) die erhöhten Bereiche (8) eine Bezugskontur (2'a) überragen und die vertieften Bereiche (7) unterhalb der Bezugskontur (2'a) ausgebildet sind, wobei die Bezugskontur (2'a) in Verlängerung der Außenkontur des Auslaufes (4a) des Schulterabschnittes (4) bis zur Schulterkante (1c) verläuft und im Querschnitt eine gerade oder leicht nach außen gebogen verlaufende Linie ist, wobei die vertieften Bereiche (7) unmittelbar an die Schulterkante (1c) anschließen und die erhöhten Bereiche (8) in Richtung Seitenwand (3) an die vertieften Bereiche (7) anschließen,
**dadurch gekennzeichnet,**
**dass** die vertieften Bereiche Vertiefungen sind, deren Böden (7a) im Wesentlichen parallel zur Bezugskontur (2'a) verlaufen, wobei die erhöhten Bereiche (8) Flankenblöcke sind, deren Außenflächen (8a) im Wesentlichen parallel zur Bezugskontur (2'a) verlaufen.

2. Fahrzeugluftreifen nach Anspruch 1, **dadurch gekennzeichnet, dass** die vertieften Bereiche (7) zur Bezugskontur (2'a) einen Abstand von bis zu 3 mm aufweisen.

3. Fahrzeugluftreifen nach Anspruch 1 oder 2, **dadurch gekennzeichnet, dass** die erhöhten Bereiche (8) zur Bezugskontur (2'a) einen Abstand von bis zu 3 mm aufweisen.

4. Fahrzeugluftreifen, bei welchem die beiden Schulterflanken (2) unterschiedlich ausgestaltet sind, wobei die bei am Fahrzeug montiertem Reifen außen befindliche Schulterflanke (2) gemäß einem oder mehreren der Ansprüche 1 bis 3 ausgeführt ist, wobei die Gummivolumina in den beiden Schulterabschnitten (4) zumindest im Wesentlichen gleich groß sind.

5. Fahrzeugluftreifen, bei welchem beide Schulterflanken (2) gemäß einem oder mehreren der Ansprüche 1 bis 3 und zumindest bezüglich der Gummivolumina übereinstimmend ausgestaltet sind.

## Claims

1. Pneumatic vehicle tyre with a profiled tread (1) comprising shoulder portions (4) that are offset by shoulder edges (1c) and have shoulder flanks (2), which are provided with elevated and recessed regions (7, 8), wherein on at least one shoulder flank (2) the elevated regions (8) rise up above a reference contour (2'a) and the recessed regions (7) are formed below the reference contour (2'a), wherein the reference contour (2'a) runs as an extension of the outer contour of the run-out (4a) of the shoulder portion (4) as far as the shoulder edge (1c) and is in cross section a straight-running or slightly outwardly curved line, wherein the recessed regions (7) directly adjoin the shoulder edge (1c) and the elevated regions (8) adjoin the recessed regions (7) in the direction of the sidewall (3),
**characterized**
**in that** the recessed regions are depressions, the bases (7a) of which run substantially parallel to the reference contour (2'a), wherein the elevated regions (8) are flank blocks, the outer surfaces (8a) of which run substantially parallel to the reference contour (2'a).

2. Pneumatic vehicle tyre according to Claim 1, **characterized in that** the recessed regions (7) are at a distance of up to 3 mm from the reference contour (2'a) .

3. Pneumatic vehicle tyre according to Claim 1 or 2, **characterized in that** the elevated regions (8) are at a distance of up to 3 mm from the reference contour (2'a) .

4. Pneumatic vehicle tyre, in which the two shoulder flanks (2) are differently designed, wherein the shoulder flank (2) that is on the outside when the tyre is fitted on the vehicle is configured according to one or more of Claims 1 to 3, wherein the volumes of rubber in the two shoulder portions (4) are at least substantially equal.

5. Pneumatic vehicle tyre in which the two shoulder flanks (2) are designed according to one or more of Claims 1 to 3 and in the same manner as each other, at least with respect to the volumes of rubber.

## Revendications

1. Pneumatique de véhicule comprenant une bande de roulement profilée (1) pourvue de portions d'épaulements (4) séparées par des bords d'épaulement (1c) et comportant des flancs d'épaulement (2) qui sont pourvus de zones surélevées et creusées (7, 8), les zones surélevées (8) faisant saillie au-delà d'un contour de référence (2'a), et les zones creusées (7) étant formées au-dessous du contour de référence (2'a), au niveau d'au moins un flanc d'épaulement (2), le contour de référence (2'a) s'étendant dans le prolongement du contour extérieur de la sortie (4a) de la portion d'épaulement (4) jusqu'au bord d'épaulement (1c) et représentant en coupe transversale une ligne droite ou légèrement incurvée vers l'extérieur, les zones creusées (7) se raccordant directement au bord d'épaulement (1c) et les zones surélevées (8) se raccordant, en direction de la paroi latérale (3), aux zones creusées (7),
**caractérisé en ce que**
les zones creusées sont des cavités dont les fonds (7a) s'étendent sensiblement parallèlement au contour de référence (2'a), les zone surélevées (8) étant des blocs de flanc dont les surfaces extérieures (8a) s'étendent sensiblement parallèlement au contour de référence (2'a).

2. Pneumatique de véhicule selon la revendication 1, **caractérisé en ce que** les zones creusées (7) sont à une distance allant jusqu'à 3 mm du contour de référence (2' a) .

3. Pneumatique de véhicule selon la revendication 1 ou 2, **caractérisé en ce que** les zones surélevées (8) sont à une distance allant jusqu'à 3 mm du contour de référence (2'a).

4. Pneumatique de véhicule, dans lequel les deux flancs d'épaulement (2) sont conçus différemment, le flanc d'épaulement, se trouvant à l'extérieur lorsque le pneumatique de véhicule (2) est monté, étant réalisé selon une ou plusieurs des revendications 1 à 3, les volumes de caoutchouc dans les deux portions d'épaulement (4) étant au moins sensiblement de même taille.

5. Pneumatique de véhicule, dans lequel les deux flancs d'épaulement (2) sont conçus de façon correspondante selon une ou plusieurs des revendications 1 à 3 et au moins en ce qui concerne les volumes de caoutchouc.
